(19) **Europäisches Patentamt / European Patent Office / Office européen des brevets**

(11) **EP 3 282 213 B1**

(12) # EUROPÄISCHE PATENTSCHRIFT

(45) Veröffentlichungstag und Bekanntmachung des Hinweises auf die Patenterteilung:
**08.05.2019   Patentblatt 2019/19**

(51) Int Cl.:
**F28D 7/02** *(2006.01)*    **F28D 7/04** *(2006.01)*
**G01M 5/00** *(2006.01)*    **B21D 11/06** *(2006.01)*
**B21D 53/06** *(2006.01)*    **B23P 15/26** *(2006.01)*

(21) Anmeldenummer: **16001769.5**

(22) Anmeldetag: **09.08.2016**

(54) **VERFAHREN ZUM BESTIMMEN EINER FESTIGKEIT EINES ROHRBÜNDELWÄRMETAUSCHERS UND HERSTELLUNGSVERFAHREN**

METHOD FOR DETERMINING A STRENGTH OF A TUBE BUNDLE HEAT EXCHANGER AND METHOD OF MANUFACTURING

PROCEDE DE DETERMINATION DE LA RESISTANCE D'UN ECHANGEUR A FAISCEAUX TUBULAIRES ET PROCEDE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.02.2018   Patentblatt 2018/07**

(73) Patentinhaber: **Linde Aktiengesellschaft**
**80331 München (DE)**

(72) Erfinder:
• **Hölzl, Reinhold**
  **82538 Geretsried (DE)**

• **Spreemann, Jürgen**
  **83022 Rosenheim (DE)**
• **Stefanescu, Adriana**
  **81825 München (DE)**

(74) Vertreter: **Meilinger, Claudia Sabine**
**Linde AG**
**Technology & Innovation**
**Corporate Intellectual Property**
**Dr.-Carl-von-Linde-Straße 6-14**
**82049 Pullach (DE)**

(56) Entgegenhaltungen:
**US-A- 3 353 250     US-A- 4 984 360**

**Beschreibung**

Die vorliegende Erfindung betrifft ein Verfahren zum Bestimmen einer Steifigkeit oder Festigkeit eines Rohrbündelwärmetauschers, sowie Verfahren zum Bestimmen eines Zustandes, wie z.B. einer Festigkeit oder einer Lebensdauer eines Rohrbündelwärmetauschers, sowie ein Verfahren zur Herstellung desselben, unter Verwendung des Verfahrens gemäß der vorliegenden Erfindung.

Bei Rohrbündelwärmetauschern werden mehrere dünne Rohre in vielen Lagen um ein Kernrohr spiralförmig gewickelt. Man spricht bei Rohrbündelwärmetauschern auch von spiralgewickelten Wärmetauschern. Sie werden meist zur Behandlung von Fluide, wie Flüssigkeiten eingesetzt und müssen großen Temperatur- und Druckschwankungen widerstehen.

Bei der Herstellung, Transport und im Betrieb sind entsprechende Rohrbündelwärmetauscher bzw. die darin eingesetzten Materialien, insbesondere mechanischen und thermischen Einflüssen ausgesetzt. Beispielsweise müssen die Materialeigenschaften und Stärken an jeweilige Anwendungs- und Anforderungssituationen angepasst werden. Dabei spielt insbesondere das Gewicht der vielen gewickelten Rohre auf das jeweilige Kernrohr und/oder die jeweilige darunterliegenden Wicklungslage eine Rolle.

Es hat sich gezeigt, dass bei der Herstellung entsprechender Rohrbündelwärmetauscher die innere mechanische Beanspruchung nicht vernachlässigt werden kann. Bei bekannten Herstellungsverfahren rotieren das Kernrohr und die halbgewickelten Wicklungsrohre um eine Bündelachse. Dabei ist das System aus dem Kernrohr und der um diesen aufzuwickelnden Wickelrohre zwischen den Lagerpunkten mechanisch belastet. Es ist dabei wünschenswert, die sich verändernde Festigkeit der sich ergebenden Rohrbündelwärmetauscher abschätzen zu können. In der Vergangenheit wurden die Festigkeiten oder Steifigkeiten solcher Systeme durch einfache Modelle unter Berücksichtigung von Stäben oder Ersatzzylindern berechnet.

Es ist ferner wünschenswert, die mechanische und thermische Beanspruchung entsprechender Rohrbündelwärmetauscher während des Betriebs zu prognostizieren, um deren Lebensdauer, Wartungsanfälligkeit oder Beständigkeit einzuschätzen. Dazu werden Simulationsverfahren benötigt, die neben den mechanischen Beanspruchungen auch thermodynamische Einflüsse berücksichtigen. Bei all diesen Simulationen ist die zuverlässige Bestimmung der Steifigkeit des Rohrbündelsystems besonders gewünscht.

Es ist daher eine Aufgabe der vorliegenden Erfindung, verbesserte Simulationsmodellierungs- und Bestimmungsmöglichkeiten bereit zu stellen, um Rohrbündelwärmetauscher zu erfassen.

Diese Aufgabe wird durch ein Verfahren mit den Merkmalen des Anspruchs 1 gelöst. Die abhängigen Ansprüche nennen optionale Weiterbildungen.

Demgemäß wird ein Verfahren zum Bestimmen einer Steifigkeit eines Rohrbündelwärmetauschers vorgeschlagen. Der betrachtete Rohrbündelwärmetauscher umfasst ein Kernrohr und um das Kernrohr zu einem Rohrbündel gewickelten Wickelrohre, wobei die Wickelrohre in mehreren Wicklungslagen und mit einem jeweiligen Lagenwicklungswinkel um das Kernrohr gewickelt sind. Es werden die folgenden Schritte durchgeführt:

Bestimmen eines geometrischen Festigkeitsparameters, einer jeweiligen Wicklungslage, wobei der geometrische Festigkeitsparameter ein Flächenverhältnis von einer Wickelrohrquerschnittsfläche mit einer Zellenquerschnittsfläche umfasst, wobei sich die Zellquerschnittsfläche aus dem axialen Abstand der Wickelrohre und eines Außendurchmessers der Wickelrohre ergibt;

Korrigieren des Flächenverhältnisses um einen Korrekturfaktor zum Berücksichtigen der Orientierung der Wickelrohre der jeweiligen Wicklungslage bezüglich der auf die Wickelrohre wirkenden Schwerkraft; und

Bestimmen der Steifigkeit der jeweiligen Wicklungslage in Abhängigkeit von dem korrigierten Flächenverhältnis und einem Elastizitätsmodul des Wickelrohrmaterials.

Bei dem vorgeschlagenen Verfahren wird die Orientierung der Wickelrohre bezogen auf die Schwerkraft durch einen Korrekturfaktor berücksichtigt. In bestimmten Herstellungssituationen für Rohrbündelwärmetauscher verläuft das Kernrohr horizontal entlang einer Bündelachsrichtung. Die Wickelrohre tragen insbesondere lagenweise zu einer Festigkeit des Rohrbündelwärmetauschers bei. Bei in der Vergangenheit vereinfacht angenommenen Modellierungen, wurden die Wicklungslagen allerdings als einfache Kreiszylinder betrachtet, wodurch der Einfluss der spiralförmigen Aufwicklung der Wickelrohre unberücksichtigt blieb. Es wird nun vorgeschlagen, den Korrekturfaktor in Abhängigkeit von dem Lagenwicklungswinkel festzulegen. Dadurch wird eine verbesserte Abschätzung, bzw. Bestimmung der Steifigkeit erzielt.

In bestimmten Betriebssituationen verläuft die Bündelachsrichtung vertikal, sodass die Schwerkraft vektoriell entlang des Kernrohres wirkt. Auch in dieser Konfiguration wird mit Hilfe des Korrekturfaktors der Einfluss der Schwerkraft auf die Steifigkeit berücksichtigt.

In Ausführungsformen wird der Korrekturfaktor proportional zu einem Sinus des Lagenwicklungswinkels gewählt. Durch einen Korrekturfaktor, der als Sinus des Lagenwicklungswinkels bestimmt ist, erfolgt insbesondere bei einer horizontalen Lagerung des Kernrohres bzw. einer horizontalen Anordnung der Bündelachse eine Projektion des auf die Steifigkeit der Rohrbündel Einfluss habenden Anteils der Wickelrohre zur Erdbeschleunigung hin. Insofern wird durch den Korrekturfaktor der vektorielle Anteil der Schwerkraft auf die schräge Wicklung berücksichtigt. Die Steifigkeit ist insbesondere eine Biegesteifigkeit, welche von dem Elastizitätsmodul des jeweiligen Wickelrohrmaterials abhängt. Als Materialien kommen z.B. Aluminium oder Edelstahl in Frage. Allerdings sind auch andere Materialien denkbar.

Insofern umfasst das Verfahren einen Schritt: Berechnen einer Biegesteifigkeit einer Wicklungslage eines Rohrbündels, indem ein Festigkeitsmodell von einem Ersatzrohr aus einem Wickelrohrmaterial zugrunde gelegt wird, wobei das Ersatzrohr einer Wicklungslage entspricht, und das Ersatzrohr mit einem Flächenverhältnis aus der Wickelrohrquerschnittsfläche mit der Zellenquerschnittsfläche gewichtet wird, wobei ein von einem Wicklungswinkel abhängiger Korrekturfaktor die Biegesteifigkeit reduziert.

In Ausführungsformen wird zum Bestimmen der Steifigkeit der jeweiligen Wicklungslage, die Wicklungslage als ein aus dem Wickelrohrmaterial gefertigter Kreiszylinder modelliert. Darüber hinaus wird durch die Bestimmung des Flächenverhältnisses sowie des Korrekturfaktors eine realistische Modellbildung erzielt. D.h., insbesondere bei der Herstellung eines Rohrbündelwärmetauschers kann die Lager- und Rotationssituation derart eingestellt werden, dass keine übermäßigen Spannungen an den Materialien auftreten und der Wärmetauscher zuverlässig gefertigt werden kann.

In Ausführungsformen umfasst das Verfahren ferner ein Bestimmen einer Steifigkeit des Rohrbündels in einer Bündelachsrichtung. Dabei erfolgt eine Bestimmung der Biegesteifigkeit mittels derer, die sich einstellende Krümmung entlang der Bündelachsrichtung abschätzen lassen. Daraus kann wiederum eine Spannungsanalyse abgeleitet werden.

In Ausführungsformen umfasst das Verfahren wenigstens einen der Schritte:

> Bestimmen einer Steifigkeit des Kernrohres; und Bestimmen einer auf das Kernrohr wirkenden Spannung in Abhängigkeit von einer Masse der aufgewickelten Wickelrohre der Wicklungslagen und der bestimmten Steifigkeit der Wicklungslagen.

Man kann sagen, dass sich eine Spannungsanalyse für das Rohrbündelwärmetauschersystem aus Kernrohr und Wicklungslagen realisieren lässt, wobei die Last des Bündels zuverlässig berücksichtigt wird. In Ausführungsformen wird eine Spannungsanalyse des Rohrbündels mit Hilfe eines Finite-Elemente-Verfahrens durchgeführt. Das Kernrohr, das Rohrbündel und/oder der Rohrbündelwärmetauscher werden dabei horizontal auf zwei Lagerpunkten angeordnet.

Finite-Elemente-Verfahren ermöglichen strukturmechanische Berechnungen von Zuständen mechanischer Systeme. Denkbar ist z.B. der Einsatz kommerzieller Software-Pakete, um auf Basis der vorgeschlagenen Verfahren zur Bestimmung und Abschätzung der Steifigkeit Spannungsanalysen durchzuführen.

In Ausführungsformen sind die Wicklungslagen mit Hilfe von Wicklungsstegen radial voneinander beabstandet. Derartige Wicklungsstege zur Beabstandung der Wicklungslagen können ebenfalls hinsichtlich ihres Beitrags zur Festigkeit des Rohrbündels berücksichtigt werden.

Die Wickelrohre sind in Ausführungsformen in Richtung einer Kernrohrachse oder einer Bündelachsrichtung um einen Wickelrohrmittelpunktsabstand voneinander beabstandet. Man kann bei dem regelmäßigen Wickelrohrmittelpunktsabstand auch von einer Teilung sprechen, welche in axialer Richtung die Ausdehnung einer periodischen Zelle bestimmt.

Ferner kann ein jeweiliges Wickelrohr einen Innendurchmesser und einen Außendurchmesser haben. Die Wickelrohrquerschnittsfläche bestimmt sich dann aus $1/4 \times \pi \times$ der Differenz der Quadrate des Innen- und des Außendurchmessers.

Bei dem Verfahren wird insbesondere eine korrigierte Steifigkeit des Rohrbündelwärmetauschers bestimmt, indem ein gemittelter Korrekturfaktor zum Bestimmen der Steifigkeiten aller Wicklungslagen gewählt wird. Zum Beispiel kann aufgrund der Wicklungswinkel zur Vereinfachung einer späteren Berechnung oder Analyse für alle Lagen gleich angenommen werden. Alternativ oder zusätzlich kann auch ein Korrekturfaktor als eine trigonometrische Funktion des Wicklungswinkels für alle Lagen des Rohrbündelwärmetauschers genommen werden.

Eine Umfangslinie der jeweiligen Wickelfläche für ein Wickelrohr und die jeweilige Wickelrichtung schließen den Wicklungswinkel $\alpha$ ein.

In Ausführungsformen des Verfahrens zum Bestimmen einer Steifigkeit wird durch den Korrekturfaktor eine ermittelte Steifigkeit der jeweiligen Wicklungslage im Vergleich zu einer Ersatzsteifigkeit, welche mit Hilfe des Flächenverhältnisses und eines Steifigkeitsmodells, das einen Kreiszylinder berücksichtigt, erhalten wird, reduziert. D.h., durch die Berücksichtigung des Einflusses der Schwerkraft bzw. der Berücksichtigung nur des zur Steifigkeit beitragenden Anteils der Wickelrohre bezüglich der Bündelachsrichtung und/oder der Schwerkraft wird eine realistischere Abschätzung oder Berechnung ermöglicht. Gegenüber einfachen Modellen, die keinerlei Korrekturfaktoren berücksichtigen, liefert die Erfindung realistischere, niedrigere Steifigkeiten, so dass bei der Herstellung von Rohrbündelwärmetauschern beim Transport oder bei bestimmten Betriebszuständen eine realistischere Modellierung oder Simulation erfolgt.

Es wird ferner ein Verfahren zum Bestimmen eines Zustandes eines Rohrbündelwärmetauschers zur Lebensdaueranalyse vorgeschlagen. Der Rohrbündelwärmetauscher hat ein Kernrohr und um das Kernrohr zu einem Rohrbündel gewickelte Wickelrohre, wobei die Wickelrohre in mehreren Wicklungslagen und mit einem jeweiligen Lagenwicklungswinkel um das Kernrohr gewickelt sind. Die Steifigkeit des Rohrbündelwärmetauschers wird mit Hilfe eines zuvor oder im Folgenden beschriebenen Verfahrens gemäß der vorliegenden Erfindung ermittelt.

Optional kann dabei ferner eine Größe, wie eine spezifische Wärmekapazität, eine Wärmeleitfähigkeit oder ein thermischer Ausdehnungskoeffizient einer jeweiligen Wicklungslage unter Berücksichtigung des Korrekturfaktors ermittelt werden. Insbesondere bei einer Abschätzung des Korrekturfaktors durch den Sinus des Wicklungswinkels ergibt sich eine Projektion des Einflusses der Wickelrohre auf die jeweilige Größe entlang der Bündelachse. Dadurch können auch thermomechanische Analysen genauer und zuverlässiger erfolgen.

Bei einem Verfahren zum Herstellen eines Rohrbündelwärmetauschers werden Wickelrohre in mehreren Wicklungslagen und mit einem jeweiligen Lagenwicklungswinkel um ein Kernrohr gewickelt. Dabei wird während des Wickelns eine Steifigkeit des Rohrbündelwärmetauschers mit Hilfe eines zuvor oder im Folgenden vorgestellten Verfahrens gemäß der vorliegenden Erfindung überwacht.

Bei den vorgeschlagenen Verfahren ist der Lagenwicklungswinkel, insbesondere nicht verschwindend und zwischen 1° und 50°, vorzugsweise zwischen 3° und 10°. Die Anzahl der Wicklungslagen beträgt z.B. zwischen 2 und 200. Die Außendurchmesser der Wickelrohre betragen beispielsweise zwischen 5 und 200 mm. Elastizitätsmodule des Wickelrohrmaterials können zwischen 70.000 und 210.000 N/mm$^2$ betragen. Weiterhin wird ein Computerprogrammprodukt vorgeschlagen, welches auf einer programmgesteuerten Einrichtung die Durchführung des bzw. der wie oben erläuterten Verfahren veranlasst. Denkbar ist zum Beispiel die Durchführung mit Hilfe eines Computers oder eines Leitwartenrechners für eine verfahrenstechnische Anlage.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Das bzw. die Verfahren sind insbesondere software-implementiert, und es wird im Folgenden auch synomym von einer Simulationssoftware gesprochen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt schematisch eine Ausführungsform eines Rohrbündelwärmetauschers im Teilquerschnitt.

Fig. 2 zeigt eine schematische Darstellung einer Wickelfläche zur Erläuterung eines Lagenwicklungswinkels.

Fig. 3 zeigt schematisch eine Ausführungsform eines Rohrbündelwärmetauschers im Querschnitt zur Längsachse.

Fig. 4 zeigt eine Detaildarstellung einer Wicklungslage im Querschnitt.

Fig. 5 zeigt eine Ausführungsform eines Rohrbündelwärmetauschers, welcher horizontal gelagert ist, im Längsschnitt.

Fig. 6 zeigt einen schematischen Ablauf von Verfahrensschritten zur Bestimmung der Steifigkeit eines Rohrbündelwärmetauschers;.

Fig. 7 und Fig. 8 zeigen horizontal gelagerte Rohrbündelwärmetauscher zur Erläuterung eines Herstellungsverfahrens derselben.

In den Figuren sind gleiche oder funktionsgleiche Elemente mit denselben Bezugszeichen versehen, sofern nichts anderes angegeben ist.

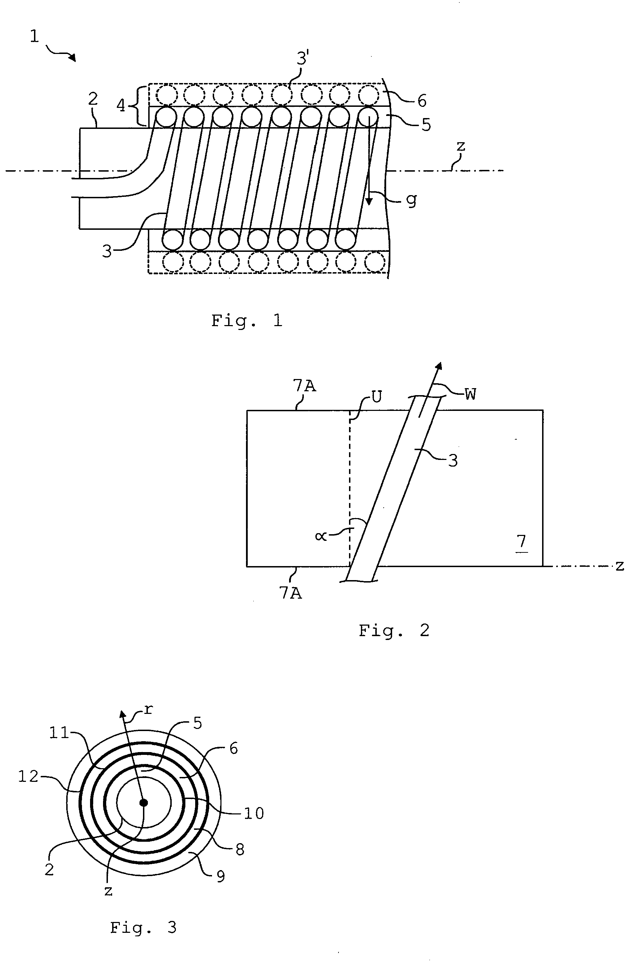

Fig. 1 zeigt ein erstes Ausführungsbeispiel für einen Rohrbündelwärmetauscher 1. Rohrbündelwärmetauscher oder spiralgewickelte Wärmetauscher umfassen auf ein Kernrohr gewickelte Rohrbündel in mehreren Lagen. Man spricht auch von spiralgewickelten Wärmetauschern, bei denen Wickelrohre um eine Längs- oder Bündelachse z aufgewickelt werden. In der Fig. 1 ist eine Bündelachsrichtung z angegeben, um die sich ein Kernrohr 2 erstreckt. Auf das Kernrohr 2 sind spiralförmig Wickelrohre 3 umwickelt. In der Darstellung der Fig. 1 ist ein Ausschnitt des sich ergebenden Rohrbündelwärmetauschers 1angedeutet.

Eine erste innere Wicklungslage 5 umfasst spiralförmig gewickelte Rohre 3. Radial nach außen schließt sich eine weitere Wicklungslage 6 mit weiteren Wickelrohren 3' an. Es ist möglich, dass die Wickelrohre 3, 3' nicht direkt aneinander liegen, sondern über Stege radial beabstandet sind. Obgleich in der Fig. 1 nur zwei Wicklungslagen 5, 6 angedeutet sind, haben Ausführungsformen von Rohrbündelwärmetauschern bis zu 100 Lagen.

In der Orientierung der Fig. 1 verläuft die Bündelachse z horizontal. Insbesondere bei der Herstellung entsprechender Rohrbündelwärmetauscher 1 erfolgt ein Aufwickeln der Wickelrohre 3, 3' von innen nach außen. Dabei werden die mehreren Wicklungslagen 5, 6 erzeugt. Bei Betrieb und Einsatz vor Ort werden solche Rohrbündelwärmetauscher 1 meist vertikal aufgestellt. D.h., nur während der Herstellung und beispielsweise beim Transport auf einem Lastwagen oder Güterzug sind die Wärmetauscher besonderen mechanischen Belastungen quer zu ihrer axialen Ausdehnung ausgesetzt. Dies ergibt sich insbesondere durch die auf das Kernrohr 2 und die inneren Wicklungslagen 5 wirkenden Kräfte aufgrund des Gewichts der aufliegenden Wicklungslagen 6. Entsprechende Rohrbündelwärmetauscher können Gewichte von 2 bis 300 t bei Durchmessern von mehreren Metern umfassen. Als Materialien für die Wickelrohre werden meist Aluminium oder Edelstahlvarianten verwendet.

Um bei einer Herstellung und beim Transport die Rohrbündel 4 und das Kernrohr 2 nicht zu beschädigen oder über Gebühr zu belasten, ist es wünschenswert die Festigkeit oder Steifigkeit des sich ergebenden Systems aus dem Kernrohr 2 und dem Rohrbündel 4 zu bestimmen oder im Voraus abzuschätzen. Dazu können Simulationen durchgeführt werden. Untersuchungen der Anmelderin haben gezeigt, dass dabei insbesondere der Einfluss der Rohrbündel 5, 6 auf die Steifigkeit entlang der Bündelachse z von Belang ist und dabei nur der vektorielle Beitrag in Bezug auf die Erdbeschleunigung g, die in der Fig. 1 angedeutet ist, zu berücksichtigen ist.

In der Fig. 2 ist zur Erläuterung des Wicklungswinkels $\alpha$ eine Wickelfläche 7 schematisch dargestellt. Die Wickelfläche 7 ist die Fläche eines gedachten Kreiszylinders mit einer Längsachse z, auf die ein entsprechendes Rohrbündel 5 (vgl. Fig. 1) aufgewickelt ist. In der Fig. 2 ist ein einzelnes Rohr 3 mit einer Wickelrichtung W angedeutet. Die gestrichelte Linie U entspricht einer Umfangslinie der Wickelfläche 7. Die Fig. 2 zeigt eine abgewickelte Mantelfläche des entsprechenden Zylinders, d.h., die oberen und unteren Begrenzungen 7A fallen auf der Mantelfläche zusammen. Der Winkel a, der als Wicklungswinkel bezeichnet ist, wird von der Umfangslinie U und der Wickelrichtung W eingeschlossen.

Auf die mechanische Stabilität bzw. Steifigkeit entlang der axialen Richtung z, also entlang der Bündelachse hat nun nicht das gesamte Material mit seinem Elastizitätsmodul Einfluss, sondern nur die Projektion auf die z-Achse. Um insbesondere die Biegesteifigkeit des Gesamtsystems zu bestimmen, genügt es insofern nicht, die, wie in der Fig. 1 dargestellten Wicklungslagen 5, 6 als Rohre oder Zylinder zu betrachten. Vielmehr haben Untersuchungen der Anmelderin ergeben, dass die Berücksichtigung eines Korrekturfaktors notwendig ist, um realistische Festig- oder Steifigkeitsbestimmungen durchzuführen.

In der Fig. 3 sieht man einen schematischen Querschnitt zur Längsachse z eines Rohrbündelwärmetauschers, wobei radial von innen nach außen zunächst das Kernrohr 2 vorliegt. Darauf aufgewickelt ist eine erste Wicklungslage 5 mit Wickelrohren, eine zweite Wicklungslage 6, eine dritte Wicklungslage 8 und eine vierte äußere Wicklungslage 9. Zwischen der ersten und zweiten Wicklungslage sind zum radialen Beabstanden Stege 10 vorgesehen. Genauso sind weitere Stege 11, 12 zwischen der zweiten und dritten Wicklungslage 6, 8 und zwischen der dritten Wicklungslage 8 und der vierten äußeren Wicklungslage 9 vorgesehen.

In der Vergangenheit wurden die Steifigkeiten des sich ergebenden Rohrbündelwärmetauschers 1 mit Hilfe von Ersatzzylindern in der Form der Wicklungslagen 5, 6, 8, 9 mit einer Gewichtung des Flächenverhältnisses der Wickelrohre zu periodischen Zellen ermittelt. Dies hat sich als nicht immer zuverlässig erwiesen, so dass zur Berücksichtigung der auf die Wickelrohre wirkenden Schwerkraft ein Korrekturfaktor, insbesondere zur Bestimmung des Flächenverhältnisses, vorgeschlagen wird.

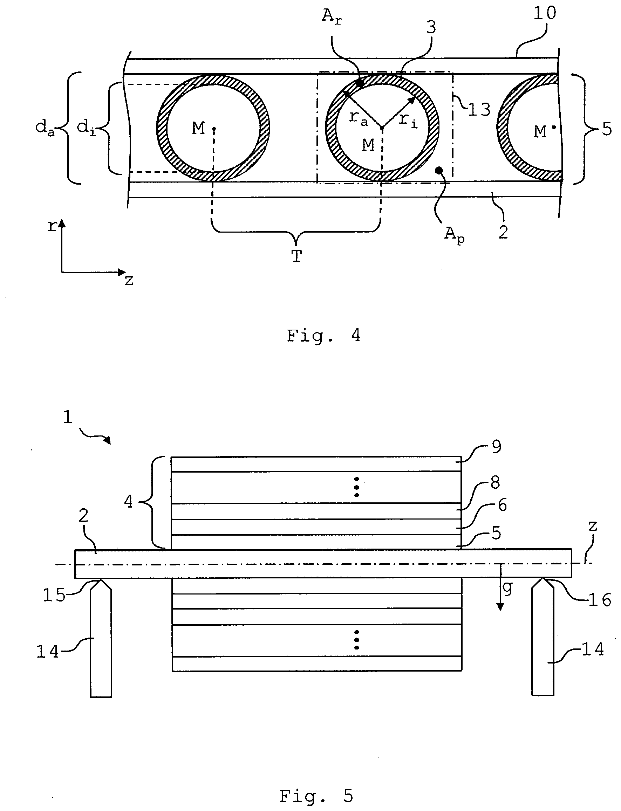

Die Fig. 4 zeigt eine Detailansicht einer Wicklungslage 5. Dabei stellt die Figur einen Querschnitt durch die Wickelrohre 3 dar. In der Fig. 4 verläuft die horizontale Achse entlang der Bündelachsrichtung z, und nach oben ist der radiale Abstand r angedeutet. Man erkennt den Querschnitt des Kernrohres 2, auf das eine erste Wicklungslage 5 mit Wickelrohren 3 umwickelt ist. Die Wickelrohre 3 haben jeweilige Mittelpunkte M und eine kreisrunde Querschnittsfläche mit jeweils einem Innenradius $r_i$ und einem Außenradius $r_a$. Dadurch ergibt sich, wie links in der Fig. 4 angedeutet ist, ein Innendurchmesser $d_i$ und ein Außendurchmesser $d_a$. Die radiale Ausdehnung der Wicklungslage 5 entspricht dabei dem Außendurchmesser $d_a$. Man erkennt ferner, dass die Mittelpunkte M regelmäßig um eine axiale Beabstandung T voneinander vorliegen. Man kann daher eine periodische Zelle 13 definieren, die sich aus den Wickelrohrmittelpunktabständen T ergibt. Die Zelle ist gestrichpunktet mit 13 angedeutet. Radial nach außen schließt sich ein Wicklungssteg 10 an, der beispielsweise als ein Zylinder modelliert werden kann.

Um eine Festigkeitsanalyse bzw. eine Steifigkeit des sich ergebenden Rohrbündelwärmetauschers abzuschätzen, erfolgt eine Betrachtung des Flächenverhältnisses von der Fläche Ap der Einheitszelle 13 mit der sich ergebenden Wickelrohrquerschnittsfläche $A_r$. Die Wickelrohrquerschnittsfläche $A_r$ kann bestimmt werden als $A_r = 1/4 \times \pi \times (d_a^2 - d_i^2)$.

Die Querschnittsfläche der Zelle $A_p$ ist $A_p = T \times d_a$. Das Verhältnis $A_p/A_r$ ist ein wesentlicher Parameter zur Bestimmung der Steifigkeit der Wicklungslage 5. Darüber hinaus wird jedoch auch der in der Fig. 4 nicht gezeigte Wicklungswinkel $\alpha$ berücksichtigt. Die Anmelderin hat erkannt, dass das Flächenverhältnis $A_p/A_r$ alleine bei der Modellierung für die Steifigkeit zu höheren Werten führt als dies tatsächlich der Fall ist. Daher erfolgt eine Projektion des Anteils der Wickelrohre einer Wicklungslage auf die Längsachse. Dadurch ergibt sich ein Korrekturfaktor sin $\alpha$ < 1, wodurch bei weiteren Berechnungen der Steifigkeit bzw. Biegesteifigkeit ein realistisches Ergebnis erzielt wird. Insbesondere bei der Herstellung oder beim Transport von Rohrbündelwärmetauschern kann daher die Last des Kernrohrs unter dem Einfluss der Rohrbündel und einer Auflagerung besser berücksichtigt werden.

Das vorgeschlagene Flächenverhältnis $A_p/A_r$ mit einem Korrekturfaktor sin $\alpha$ kann bei weiteren numerischen Spannungsanalysen, beispielsweise mit Hilfe von Finite-Elemente-Methoden berücksichtigt werden. Außerdem gehen weitere Materialparameter, wie das Elastizitätsmodul des jeweiligen Winkelrohrmaterials ein. In Ausführungsbeispielen beträgt die Teilung bzw. die axiale Erstreckung der Zelle 18 mm, und die Wickelrohre haben einen Außendurchmesser von 15 mm. Dadurch ergibt sich eine Zellquerschnittsfläche $A_p$ = 270 mm$^2$. Bei einem Innendurchmesser des Wickelrohres von 14,1 mm erhält man eine Rohrquerschnittsfläche von 20,57 mm$^2$. Ein Wickelwinkel beträgt z.B. 5°, so dass der Korrekturfaktor sin 5° beträgt.

Fig. 5 zeigt ein weiteres Ausführungsbeispiel 5 für einen Rohrbündelwärmetauscher während der Herstellung. Während der Herstellung wird auf ein Kernrohr 2, welches an zwei Auflagepunkten 15 und 16 über Lager 14 gelagert ist, lagenweise eine jeweilige Wicklung 5, 6, 8, 9 aufgewickelt. Dabei rotiert das sich ergebende Rohrbündel 4 um die z-Achse bzw. Bündelachse z. Es können dabei bis zu 100 Lagen aufgewickelt werden. Insbesondere bei dieser horizontalen Lagerung drückt die Schwerkraft g auf das Kernrohr 2. Wie bereits oben angedeutet, folgt eine Steifigkeit für die jeweilige Wicklungslage 5, 6, 8, 9 aus einem Flächenverhältnis $A_p/A_r$ und dem Korrekturfaktor für die Berücksichtigung des Anteils der Festigkeit der Wickelrohre gegen die Schwerkraft g und einem Elastizitätsmodul des Wickelrohrmaterials. Zum Beispiel kann das Rohrmaterial ein Elastitzitätsmodul von 190.000 N/mm$^2$ haben. Daraus kann die Biegesteifigkeit abgeschätzt werden und einer weiteren Verarbeitung beispielsweise Finite-Elemente-Verfahren zugeführt werden.

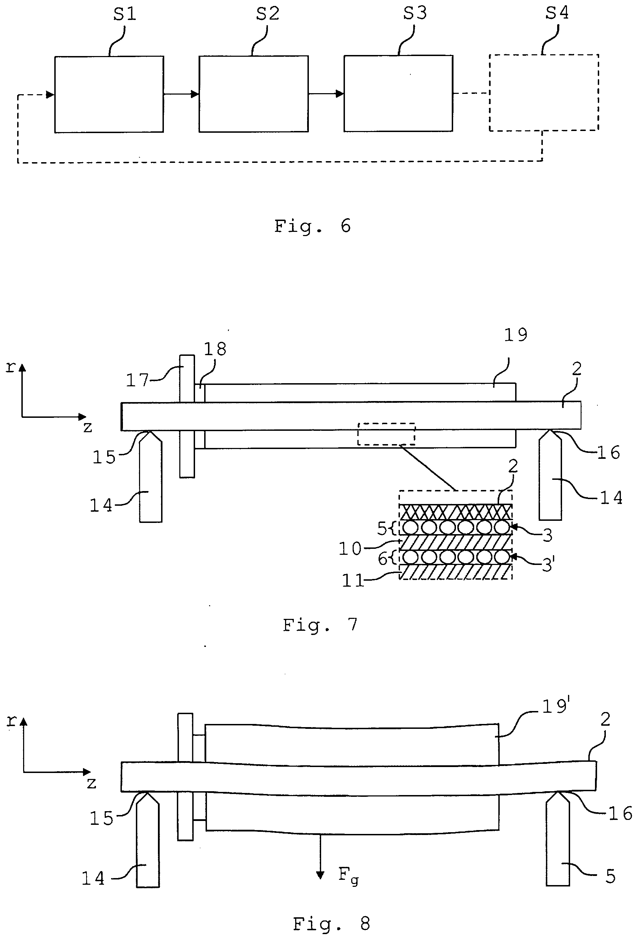

In der Fig. 6 ist beispielhaft ein Ablauf eines Verfahrens zur Bestimmung der Steifigkeit eines Rohrbündelwärmetauschers, wie er in den übrigen Figuren angedeutet ist, wiedergegeben. In einem ersten Verfahrensschritt S1 wird ein Modell erstellt, beispielsweise erfolgt die Simulation oder Modellierung einer Wicklungslage durch einen Ersatzkreiszylinder. Im Schritt S2 wird dieses Grundmodell um den jeweiligen Korrekturfaktor verbessert. Dazu wird der geometrische Festigkeitsparameter für die jeweilige Wicklungslage aus dem Flächenverhältnis $A_p/A_r$ und dem Korrekturfaktor in Abhängigkeit von dem Wicklungswinkel bestimmt, beispielsweise sin $\alpha$. Schließlich erfolgt im Schritt S3, beispielsweise mit Hilfe eines kommerziellen Softwarepakets eine Finite-Elemente-Berechnung zur Bestimmung der Steifigkeit des gesamten Rohrbündelwärmetauschersystems mit dem Kernrohr und dem Bündel. Das Ergebnis der Steifigkeitsberechnung kann einer Lebensdaueranalyse, beispielsweise um Spannungen im Rohrbündelwärmetauscher zu bestimmen, zugeführt werden. Dies ist durch den optionalen Schritt S4 angedeutet.

Beispielsweise kann auch während des Aufwinkelns der Wickelrohre kontinuierlich die Steifigkeit ermittelt werden und dadurch Herstellungsparameter, wie Wickelgeschwindigkeiten oder Wickelungswinkel angepasst werden. Dies ist in der Fig. 6 durch den rücklaufenden gestrichelten Pfeil zum Schritt S4 angedeutet.

Die Fig. 7 und 8 zeigen schematisch strukturmechanische Berechnungsergebnisse auf Basis der bestimmten Steifigkeiten der Wicklungslagen. Die Fig. 7 zeigt dabei wiederum ein aufgelagertes Rohrbündel, welches auf ein Kernrohr 2 aufgewickelt ist. Das Rohrbündel 19 hat dabei, wie in der Detaildarstellung der Fig. 7 angedeutet ist, mehrere Wicklungslagen 3, 3', die auf das Kernrohr 2 aufgewickelt sind und die durch Wicklungsstege 10, 11 radial beabstandet sind. In der Orientierung der Fig. 7 verläuft die Bündelachse z horizontal, und das Kernrohr 6 ist mit einem Stützteller 17 und einem Abstandshalter 18 für das Rohrbündel 19 auf dem Kernrohr 2 versehen. Die Fig. 7 zeigt die Orientierung der Längsachse z während der Herstellung oder während eines Transports auf zwei Auflagepunkten 15, 16. In der späteren Anwendung wird die Achse vertikal verschwenkt, so dass der Stützteller 17 zusammen mit dem Abstandshalter das Rohrbündel 19 abstützt und trägt.

Während der Herstellung wirken nun zwischen den Auflagepunkten 15, 16 durch das Gewicht der Rohrbündel 19 besondere Kräfte auf das Kernrohr 2 und das Rohrbündel 19' selbst. Dies ist in der Fig. 8 angedeutet. Aufgrund der sich ergebenden Biegesteifigkeit des Rohrbündels, das in der Fig. 8 mit 19' bezeichnet ist, und weitere Wicklungslagen umfasst, ergibt sich eine Krümmung bzw. ein gewisses Durchhängen zwischen den Auflagepunkten 15, 16. Aufgrund der Bestimmung der Steifigkeiten der Wicklungslagen im Rohrbündel 19, 19' kann nun die Spannung in dem System, beispielsweise mit Hilfe eines Finite-Elemente-Berechnungsverfahrens, ermittelt werden. Daraus ergibt sich, wie Untersuchungen der Anmelderin zeigen, in bestimmten Bereichen eine besondere Spannungsbeanspruchung des mechanischen Systems des Rohrbündelwärmetauschers.

Aufgrund der Simulation und Abschätzung bzw. Berechnung der Festigkeiten und Steifigkeiten können bei der Verarbeitung und Herstellung sowie beim Transport diese numerischen Spannungsanalysen zuverlässig erfolgen. Das Gleiche gilt für einen Transport, beispielsweise auf einem Lastwagen, wo Rohrbündelwärmetauscher horizontal gelagert sind. Darüber hinaus ergibt sich die Möglichkeit, mit Hilfe analoger Korrekturfaktoren, die eine Projektion in axialer Richtung simulieren, weitere Simulationsparameter zu korrigieren. Denkbar ist z.B., dass die Wärmeleitfähigkeit entlang der Bündelachse z oder thermische Ausdehungskoeffizienten entsprechend realistisch angenommen werden. Dadurch wird eine thermomechanische Analyse des Rohrbündelwärmetauschers erleichtert und zuverlässiger.

Obgleich die vorliegende Erfindung anhand von Ausführungsbeispielen näher erläutert wurde, ist sie vielfältig modifizierbar. Die angegebenen Dimensionen und Anzahl von Wicklungen sind lediglich beispielhaft zu verstehen. Außerdem kann über den geometrischen Festigkeitsparameter und den Korrekturfaktor zur Berücksichtigung der Schwerkraft hinaus eine weitere Verfeinerung der numerischen Modellierung erfolgen. Ferner kann die Bestimmung der Steifigkeit unter dem Einfluss der Schwerkraft auch bei vertikal angeordneten Rohrbündelwärmetauschern erfolgen, obwohl in den dargestellten Ausführungsbeispielen meist von einer horizontalen Situation ausgegangen wurde. Insbesondere beim Betrieb des jeweiligen Rohrbündelwärmetauschers - nach dessen Herstellung und Transport zum Einsatzort - verläuft die Kernrohrachse senkrecht. Ach dann dienen die vorgenannten Verfahren mit einer vektoriellen Berücksichtigung der Schwerkraft und der Anordnung sowie des Verlaufs der Wickelrohre bezogen auf die Erdbeschleunigung der zuverlässigen Festigkeits- und Steifigkeitsbestimmung.

Verwendete Bezugszeichen:

| | |
|---|---|
| α | Wicklungswinkel |
| $A_r$ | Wickelrohrquerschnittsfläche |
| $A_p$ | Zellenquerschnittsfläche |
| $d_i$ | Innendurchmesser eines Wickelrohres |
| $d_a$ | Außendurchmesser eines Wickelrohres |
| g | Erdbeschleunigung |
| r | Radialrichtung |
| T | Wickelrohrmittelpunktsabstand/Teilung |
| U | Umfangslinie |
| W | Wicklungsrichtung |
| Z | Bündelachse/Axialrichtung |

| | |
|---|---|
| 1 | Rohrbündelwärmetauscher |
| 2 | Kernrohr |
| 3 | Wickelrohr |
| 4 | Rohrbündel |
| 5, 6 | Wicklungslage |
| 7 | Wickelfläche |
| 7A | Randlinie |
| 8, 9 | Wicklungslage |
| 10, 11, 12 | Stege |
| 13 | Zelle |
| 14 | Lager |
| 15, 16 | Auflagepunkte |
| 17 | Stützteller |
| 18 | Abstandshalter |
| 19 | Rohrbündel |

| | |
|---|---|
| S1 | Modellbildung |
| S2 | Korrekturparameterbestimmung |
| S3 | Finite-Elemente-Berechnung |
| S4 | Wickeln und Modellanpassung |

**Patentansprüche**

1. Verfahren zum Bestimmen einer Steifigkeit eines Rohrbündelwärmetauschers (1), welcher ein Kernrohr (2) und um das Kernrohr (2) zu einem Rohrbündel gewickelte Wickelrohre (3) umfasst, wobei die Wickelrohre (3) in mehreren Wicklungslagen (5,6) und mit einem jeweiligen Lagenwicklungswinkel (α) um das Kernrohr (2) gewickelt sind, mit den Schritten:

    Bestimmen eines geometrischen Festigkeitsparameters einer jeweiligen Wicklungslage (5), wobei der geometrische Festigkeitsparameter ein Flächenverhältnis von einer Wickelrohrquerschnittsfläche ($A_r$) mit einer Zellenquerschnittsfläche ($A_p$) umfasst, wobei sich die Zellenquerschnittsfläche ($A_p$) aus dem axialen Abstand (T) der Wickelrohre (3) und eines Außendurchmessers ($d_a$) der Wickelrohre (3) ergibt;
    Korrigieren des Flächenverhältnisses um einen Korrekturfaktor zum Berücksichtigen der Orientierung der Wickelrohre (3) der jeweiligen Wicklungslage bezüglich der auf die Wickelrohre wirkenden Schwerkraft ($F_g$); und
    Bestimmen der Steifigkeit der jeweiligen Wicklungslage (5) in Abhängigkeit von dem korrigierten Flächenverhältnis und einem Elastizitätsmodul des Wickelrohrmaterials.

2. Verfahren nach Anspruch 1, wobei der Korrekturfaktor proportional zu einem Sinus des Lagenwicklungswinkels (α) gewählt wird.

3. Verfahren nach Anspruch 1 oder 2, wobei zum Bestimmen der Steifigkeit der jeweiligen Wicklungslage (5) die Wicklungslage (5) als ein aus dem Wickelrohrmaterial gefertigter Kreiszylinder modelliert wird.

4. Verfahren nach einem der Ansprüche 1 - 3, ferner umfassend: Bestimmen einer Steifigkeit des Rohrbündels (4) in einer Bündelachsrichtung (z).

5. Verfahren nach einem der Ansprüche 1 - 4, ferner umfassend:

    Bestimmen einer Steifigkeit des Kernrohres (2); und
    Bestimmen einer auf das Kernrohr (2) wirkenden Spannung in Abhängigkeit von einer Masse der aufgewickelten Wickelrohre (3), der Wicklungslagen (5, 6) und der bestimmten Steifigkeit der Wicklungslagen (5, 6).

6. Verfahren nach einem der Ansprüche 1 - 5, ferner umfassend: Durchführen einer Spannungsanalyse des Rohrbündels (4) mit Hilfe eines Finite-Elemente-Verfahrens, wobei das Kernrohr (2), das Rohrbündel (4) und/oder der Rohrbündelwärmetauscher (1) horizontal auf zwei Lagerpunkten (15, 16) angeordnet wird.

7. Verfahren nach einem der Ansprüche 1 - 6, wobei die Wicklungslagen (5, 6) mit Hilfe von Wicklungsstegen (10, 11, 12) radial voneinander beabstandet sind.

8. Verfahren nach einem der Ansprüche 1 - 7, wobei die Wickelrohre (3) in Richtung einer Kernrohrachse (z) um einen Wickelrohrmittelpunktsabstand (T) voneinander beabstandet sind.

9. Verfahren nach einem der Ansprüche 1 - 8, wobei ein jeweiliges Wickelrohr (3) einen Innendurchmesser $d_i$ und einen Außendurchmesser $d_a$ hat, und die Wickelrohrquerschnittsfläche $A_r$ bestimmt wird als: $A_r = 0,25 \times (d_a^2 - d_i^2) \times \pi$.

10. Verfahren nach einem der Ansprüche 1 - 9, wobei eine korrigierte Steifigkeit des Rohrbündelwärmetauschers (1) bestimmt wird, indem ein gemittelter Korrekturfaktor zum Bestimmen der Steifigkeiten aller Wicklungslagen (5, 6, 8, 9) gewählt wird.

11. Verfahren nach einem der Ansprüche 1 - 10, wobei eine Umfangslinie (U) der jeweiligen Wickelfläche (7) für ein Wickelrohr (3) und die jeweilige Wickelrichtung (W) den Wicklungswinkel ($\alpha$) einschließen.

12. Verfahren nach einem der Ansprüche 1 - 11, wobei durch den Korrekturfaktor eine ermittelte Steifigkeit der jeweiligen Wicklungslage (5, 6) im Vergleich zu einer Ersatzsteifigkeit, welche mit Hilfe des Flächenverhältnisses und eines Steifigkeitsmodells, welches einen Kreiszylinder berücksichtigt, erhalten wird, reduziert wird.

13. Verfahren zum Bestimmen eines Zustands eines Rohrbündelwärmetauschers (1) zur Lebensdaueranalyse desselben, welcher ein Kernrohr (2) und um das Kernrohr (2) zu einem Rohrbündel (4) gewickelte Wickelrohre (3) umfasst, wobei die Wickelrohre (3) in mehreren Wicklungslagen (5, 6) und mit einem jeweiligen Lagenwicklungswinkel ($\alpha$) um das Kernrohr (2) gewickelt sind, wobei eine Steifigkeit des Rohrbündelwärmetauschers (1) mit Hilfe eines Verfahrens nach einem der Ansprüche 1 - 12 ermittelt wird.

14. Verfahren nach Anspruch 13, wobei ferner eine spezifische Wärmekapazität, eine Wärmeleitfähigkeit und/oder ein thermischer Ausdehnungskoeffizient einer jeweiligen Wicklungslage (5, 6) unter Berücksichtigung des Korrekturfaktor ermittelt werden.

15. Verfahren zum Herstellen eines Rohrbündelwärmetauschers (1), bei dem Wickelrohre (3) in mehreren Wicklungslagen (5, 6) und mit einem jeweiligen Lagenwicklungswinkel ($\alpha$) um ein Kernrohr (2) gewickelt werden, wobei während des Wickelns eine Steifigkeit des Rohrbündelwärmetauschers (1) mit Hilfe eines Verfahrens nach einem der Ansprüche 1 - 12 überwacht wird.

**Claims**

1. Method for determining a stiffness of a tube bundle heat exchanger (1), which comprises a core tube (2) and coil tubes (3) coiled around the core tube (2) to form a tube bundle, wherein the coil tubes (3) are coiled in a plurality of coil layers (5, 6) and at a respective layer coiling angle ($\alpha$) around the core tube (2), comprising the steps of:

   determining a geometric strength parameter of a respective coil layer (5), wherein the geometric strength parameter comprises an area ratio of a coil-tube cross-sectional area ($A_r$) to a cell cross-sectional area ($A_p$), wherein the cell cross-sectional area ($A_p$) results from the axial spacing (T) of the coil tubes (3) and an outer diameter ($d_a$) of the coil tubes (3);
   correcting the area ratio by a correction factor for the purpose of taking into consideration the orientation of the coil tubes (3) of the respective coil layer in relation to the force of gravity ($F_g$) acting on the coil tubes; and
   determining the stiffness of the respective coil layer (5) in dependence on the corrected area ratio and a modulus of elasticity of the coil-tube material.

2. Method according to Claim 1, wherein the correction factor is selected to be proportional to a sine of the layer coiling angle ($\alpha$).

3. Method according to Claim 1 or 2, wherein, for the purpose of determining the stiffness of the respective coil layer (5), the coil layer (5) is modelled as a circular cylinder produced from the coil-tube material.

4. Method according to one of Claims 1 - 3, further comprising: determining a stiffness of the tube bundle (4) in an axial direction (z) of the bundle.

5. Method according to one of Claims 1 - 4, further comprising:

   determining a stiffness of the core tube (2); and determining a stress acting on the core tube (2) in dependence on a mass of the coiled coil tubes (3) of the coil layers (5, 6) and on the determined stiffness of the coil layers (5, 6).

6. Method according to one of Claims 1 - 5, further comprising: performing a stress analysis of the tube bundle (4) with the aid of a finite element method, wherein the core tube (2), the tube bundle (4) and/or the tube bundle heat exchanger (1) is arranged horizontally on two bearing points (15, 16).

7. Method according to one of the Claims 1 - 6, wherein the coil layers (5, 6) are spaced apart from one another radially with the aid of coil webs (10, 11, 12) .

8. Method according to one of the Claims 1 - 7, wherein the coil tubes (3) are spaced apart from one another in the direction of a core-tube axis (z) by a coil-tube centre-point spacing (T).

9. Method according to one of Claims 1 - 8, wherein a respective coil tube (3) has an inner diameter $d_i$ and an outer diameter $d_a$, and the coil-tube cross-sectional area $A_r$ is determined as: $A_r = 0.25 \times (d_a{}^2 - di^2) \times \pi$.

10. Method according to one of Claims 1 - 9, wherein a corrected stiffness of the tube bundle heat exchanger (1) is determined by selecting an averaged correction factor for determining the stiffnesses of all coil layers (5, 6, 8, 9).

11. Method according to one of Claims 1 - 10, wherein a circumferential line (U) of the respective coiling surface (7) for a coil tube (3) and the respective coiling direction (W) include the coiling angle ($\alpha$).

12. Method according to one of Claims 1 - 11, wherein a determined stiffness of the respective coil layer (5, 6) is reduced by the correction factor in comparison with an equivalent stiffness which is obtained with the aid of the area ratio and a stiffness model which considers a circular cylinder.

13. Method for determining a state of a tube bundle heat exchanger (1) for the purpose of a lifetime analysis thereof, said heat exchanger comprising a core tube (2) and coil tubes (3) coiled around the core tube (2) to form a tube bundle (4), wherein the coil tubes (3) are coiled in a plurality of coil layers (5, 6) and at a respective layer coiling angle ($\alpha$) around the core tube (2), wherein a stiffness of the tube bundle heat exchanger (1) is determined with the aid of a method according to one of Claims 1 - 12.

14. Method according to Claim 13, wherein, further, a specific heat capacity, a heat conductivity and/or a coefficient of thermal expansion of a respective coil layer (5, 6) are determined, with the correction factor taken into consideration.

15. Method for producing a tube bundle heat exchanger (1) in which coil tubes (3) are coiled in a plurality of coil layers (5, 6) and at a respective layer coiling angle ($\alpha$) around a core tube (2), wherein, during the coiling, a stiffness of the tube bundle heat exchanger (1) is monitored with the aid of a method according to one of Claims 1 - 12.

## Revendications

1. Procédé de détermination de la résistance d'un échangeur de chaleur à faisceaux tubulaires (1) comprenant un tube central (2) et des tubes d'enroulement (3) enroulés autour du tube central (2) pour former un faisceau tubulaire, dans lequel les tubes d'enroulement (3) sont enroulés autour du tube central (2) en plusieurs couches d'enroulement (5, 6) et selon un angle d'enroulement de couche ($\alpha$) respectif, comprenant les étapes suivantes consistant à :

   déterminer un paramètre de résistance géométrique d'une couche d'enroulement (5) respective, dans lequel le paramètre de résistance géométrique comprend un rapport de surface d'une surface de section transversale de tube d'enroulement ($A_r$) à une surface de section transversale de cellule ($A_p$), dans lequel la surface de section transversale de cellule ($A_p$) est obtenue à partir de la distance axiale (T) entre les tubes d'enroulement (3) et d'un diamètre extérieur ($d_a$) des tubes d'enroulement (3) ;
   corriger le rapport de surface selon un facteur de correction pour tenir compte de l'orientation des tubes d'enroulement (3) de la couche d'enroulement respective par rapport à la force de gravité ($F_g$) agissant sur les tubes d'enroulement ; et
   déterminer la résistance de la couche d'enroulement (5) respective en fonction du rapport de surface corrigé et d'un module d'élasticité du matériau du tube d'enroulement.

2. Procédé selon la revendication 1, dans lequel le facteur de correction est choisi proportionnellement à un sinus de l'angle d'enroulement ($\alpha$) de la couche.

3. Procédé selon la revendication 1 ou 2, dans lequel, pour déterminer la résistance de la couche d'enroulement (5) respective, la couche d'enroulement (5) est modélisée comme étant un cylindre circulaire fabriqué à partir du matériau du tube d'enroulement.

4. Procédé selon l'une quelconque des revendications 1 à 3, comprenant en outre l'étape consistant à : déterminer une résistance du faisceau tubulaire (4) dans une direction axiale de faisceau (z).

5. Procédé selon l'une quelconque des revendications 1 à 4, comprenant en outre les étapes consistant à :

   déterminer une résistance du tube central (2) ; et
   déterminer une contrainte agissant sur le tube central (2) en fonction d'une masse des tubes d'enroulement (3) enroulés, des couches d'enroulement (5, 6) et de la résistance déterminée des couches d'enroulement (5, 6).

6. Procédé selon l'une quelconque des revendications 1 à 5, comprenant en outre les étapes consistant à : effectuer une analyse des contraintes du faisceau tubulaire (4) à l'aide d'une méthode par éléments finis, dans lequel le tube central (2), le faisceau tubulaire (4) et/ou l'échangeur de chaleur à faisceaux tubulaires (1) sont disposés horizontalement sur deux points d'appui (15, 16).

7. Procédé selon l'une quelconque des revendications 1 - 6, dans lequel les couches d'enroulement (5, 6) sont espacées radialement les unes des autres à l'aide de nervures d'enroulement (10, 11, 12) .

8. Procédé selon l'une quelconque des revendications 1 - 7,
dans lequel les tubes d'enroulement (3) sont espacés les uns des autres d'un entraxe de tube d'enroulement (T) dans la direction d'un axe de tube central (z).

9. Procédé selon l'une quelconque des revendications 1 - 8,
dans lequel un tube d'enroulement (3) respectif présente un diamètre intérieur $d_i$ et un diamètre extérieur $d_a$, et la surface de section transversale $A_r$ du tube d'enroulement est déterminée par :

$$A_r = 0,25 \ x \ (da^2 - d_i^2) \ x \ \pi.$$

10. Procédé selon l'une quelconque des revendications 1 - 9, dans lequel une résistance corrigée de l'échangeur de chaleur à faisceaux tubulaires (1) est déterminée en sélectionnant un facteur de correction moyenné pour déterminer la résistance de toutes les couches d'enroulement (5,6,8,9).

11. Procédé selon l'une quelconque des revendications 1 - 10, dans lequel une ligne circonférentielle (U) de la surface d'enroulement (7) respective d'un tube d'enroulement (3) et la direction d'enroulement (W) respective délimitent l'angle d'enroulement ($\alpha$).

12. Procédé selon l'une quelconque des revendications 1 - 11, dans lequel une résistance déterminée de la couche d'enroulement (5, 6) respective est réduite selon le facteur de correction par comparaison à une résistance de substitution obtenue à l'aide du rapport de surface et d'un modèle de résistance qui prend en compte un cylindre rond.

13. Procédé de détermination de l'état d'un échangeur de chaleur à faisceaux tubulaires (1) pour l'analyse de sa durée de vie, comprenant un tube central (2) et des tubes d'enroulement (3) enroulés autour du tube central (2) pour former un faisceau tubulaire (4), dans lequel les tubes d'enroulement (3) sont enroulés autour du tube central (2) en plusieurs couches d'enroulement (5, 6) et selon un angle d'enroulement de couche ($\alpha$) respectif, dans lequel une résistance de l'échangeur de chaleur à faisceaux tubulaires (1) est déterminée à l'aide d'un procédé selon l'une quelconque des revendications 1 - 12.

14. Procédé selon la revendication 13, dans lequel une capacité calorifique spécifique, une conductivité thermique et/ou un coefficient de dilatation thermique d'une couche d'enroulement (5, 6) respective sont déterminés en tenant compte du facteur de correction.

15. Procédé de fabrication d'un échangeur de chaleur à faisceaux tubulaires (1), dans lequel des tubes d'enroulement (3) sont enroulés autour d'un tube central (2) en plusieurs couches d'enroulement (5, 6) et selon un angle d'enroulement de couche ($\alpha$) respectif, dans lequel, pendant l'enroulement, une résistance de l'échangeur de chaleur à faisceaux tubulaires (1) est surveillée au moyen d'un procédé selon l'une quelconque des revendications 1-12.

Fig. 1

Fig. 2

Fig. 3

Fig. 4

Fig. 5

Fig. 6

Fig. 7

Fig. 8